# EUROPÄISCHE PATENTSCHRIFT

(11) **EP 1 941 134 B1**
(45) Veröffentlichungstag und Bekanntmachung des Hinweises auf die Patenterteilung: **29.07.2009**
(21) Anmeldenummer: 06828840.6
(22) Anmeldetag: 19.10.2006
(51) Int. Cl.: F01N 3/08

(54) **VERFAHREN ZUM BETREIBEN EINES STICKOXID-SPEICHERKATALYSATORS AN EINEM DIESELMOTOR**
METHOD FOR OPERATING A NITROGEN OXIDE STORAGE CATALYST IN A DIESEL ENGINE
PROCEDE POUR FAIRE FONCTIONNER UN CATALYSEUR-ACCUMULATEUR D'OXYDES D'AZOTE SUR UN MOTEUR DIESEL

(30) Priorität: 21.10.2005 DE 102005050517
(43) Veröffentlichungstag der Anmeldung: 09.07.2008
(73) Patentinhaber: Umicore AG & Co. KG, 63457 Hanau-Wolfgang (DE)
(72) Erfinder: ROHR, Friedemann, 63452 Hanau (DE); RUWISCH, Lutz, Marc, 64295 Darmstadt (DE); KOEGEL, Markus, 67346 Speyer (DE); KLUGE, Juliane, 80807 Muenchen (DE); GOEBEL, Ulrich, 65795 Hattersheim (DE)
(86) Internationale Anmeldenummer: PCT/EP2006/010109
(87) Internationale Veröffentlichungsnummer: WO 2007/045482

(56) Entgegenhaltungen:
- JP-A- 7 166 851

## Beschreibung

Die vorliegende Erfindung betrifft ein Verfahren zum Betreiben eines Stickoxid-Speicherkatalysators, der in der Abgasanlage eines Dieselmotors angeordnet ist.

Dieselmotoren werden mit weit überstöchiometrischen Luft/Kraftstoff-Gemischen betrieben. Ihr Abgas enthält einen entsprechend hohen Anteil an Sauerstoff von etwa 3 bis 15 Vol.-%. Als Schadstoffe emittieren sie Stickoxide (NOx), Kohlenmonoxid (CO) und Kohlenwasserstoffen (HC) und Ruß. Im Vergleich zu Benzinmotoren ist ihre Emission von Stickoxiden gering, jedoch ist es zur Erfüllung der gesetzlichen Emissionsgrenzwerte notwendig, auch diese geringen Konzentrationen noch durch eine Abgasnachbehandlung weiter zu vermindern.

Wegen des hohen Sauerstoffgehaltes des Dieselabgases können die in ihm enthaltenen Stickoxide nicht wie bei stöchiometrisch betriebenen Ottomotoren mit Hilfe von Dreiweg-Katalysatoren kontinuierlich unter gleichzeitiger Oxidation von Kohlenwasserstoffen und Kohlenmonoxid zu Stickstoff reduziert werden. Zur Entfernung der Stickoxide aus dem mageren Abgas dieser Motoren wurden daher sogenannte Stickoxid-Speicherkatalysatoren entwickelt, die die im mageren Abgas enthaltenen Stickoxide in Form von Nitraten speichern.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebiacht ist. Das Katalysatormaterial enthält das Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist. Als Speicherkomponenten werden vorwiegend die basischen Oxide der Alkalimetalle, der Erdalkalimetalle und der Seltenerdmetalle, insbesondere aber Bariumoxid, eingesetzt, welche mit Stickstoffdioxid zu den entsprechenden Nitraten reagieren.

Als katalytisch aktive Komponenten werden gewöhnlich die Edelmetalle der Platingruppe verwendet, die in der Regel gemeinsam mit der Speicherkomponente auf dem Trägermaterial abgeschieden werden. Als Trägermaterial wird überwiegend aktives, hochoberflächiges Aluminiumoxid eingesetzt. Die katalytisch aktiven Komponenten können jedoch auch auf einem separaten Trägermaterial wie zum Beispiel aktivem Aluminiumoxid aufgebracht sein.

Die Aufgabe der katalytisch aktiven Komponenten ist es, im mageren Abgas Kohlenmonoxid und Kohlenwasserstoffe zu Kohlendioxid und Wasser umzusetzen. Außerdem katalysieren sie die Oxidation von Stickstoffmonoxid zu Stickstoffdioxid, welches mit den basischen Speichermaterialien zu Nitraten reagiert (Speicherphase oder auch Magerbetrieb). Stickstoffmonoxid bildet mit den Speichermaterialien keine Nitrate. Es ist im Abgas von Dieselmotoren je nach Betriebsbedingungen des Motors zu 65 bis 95 % enthalten.

Mit zunehmender Einlagerung der Stickoxide ins Speichermaterial nimmt seine verbleibende Speicherfähigkeit ab und es muß daher von Zeit zu Zeit regeneriert werden. Hierzu wird der Motor für kurze Zeit mit fetten LuftlKraftstoff Gemischen betrieben (sogenannte Regenerationsphase oder Fettbetrieb). Unter den reduzierenden Bedingungen im fetten Abgas werden die gebildeten Nitrate zu Stickoxiden NOx zersetzt und unter Verwendung von Kohlenmonoxid, Wasserstoff und Kohlenwasserstoffen als Reduktionsmittel zu Stickstoff unter Bildung von Wasser und Kohlendioxid reduziert.

Beim Betrieb des Stickoxid-Speicherkatalysators wechseln sich Speicherphase und Regenerationsphase regelmäßig ab. Die Speicherphase dauert wegen der relativ geringen Stickoxid-Konzentration im Abgas gewöhnlich zwischen 1 und 10 Minuten, während die Regenerationsphase schon in weniger als 20 Sekunden abgeschlossen ist. Zur Ermittlung des optimalen Umschaltzeitpunktes von der Speicherphase zur Regenerationsphase kann zum Beispiel hinter dem Speicherkatalysator ein Stickoxid-Sensor angeordnet werden. Steigt die von diesem Sensor gemessene Stickoxid-Konzentration im Abgas über einen vorher festgelegten Schwellwert an, so wird die Regeneration des Katalysators eingeleitet. Der Schwellwert wird in der Regel aus dem Intervall zwischen 30 und 100, bevorzugt zwischen 30 und 60, Vol.-ppm gewählt.

Moderne Stickoxid-Speicherkatalysatoren haben einen Arbeitsbereich zwischen etwa 150 und 500 °C. Unterhalb von 150 °C findet wegen der mit sinkender Temperatur abnehmenden Geschwindigkeit der Oxidation von Stickstoffmonoxid zu Stickstoffdioxid und wegen der verlangsamten Festkörperreaktionen im Katalysator keine effektive Speicherung der Stickoxide mehr statt. Oberhalb von 500 °C sind die als Nitrate gespeicherten Stickoxide nicht mehr beständig und werden als Stickoxide ins Abgas abgegeben. Der optimale Arbeitsbereich eines Stickoxid-Speicherkatalysators liegt etwa zwischen 300 und 400 °C. Das gilt sowohl für die Speicherung der Stickoxide im mageren Abgas als auch für die Regeneration des Speicherkatalysators im fetten Abgas.

Eine Besonderheit des Dieselabgases ist seine geringe Temperatur. Im Teillastbetrieb des Motors liegt die Abgastemperatur gewöhnlich zwischen 120 und 250 °C. Nur bei Vollast kann sie gelegentlich bis auf 500 °C ansteigen. Es kommt daher häufig vor, daß das Abgas des Dieselmotors während längerer Betriebsphasen im Stadtbetrieb zwischen 120 und 250 °C liegt. In diesem Fall beobachtet man, daß eine anstehende Regeneration des Speicherkatalysators nicht vollständig abläuft, sondern daß ein gewisser Anteil der Stickoxide auf dem Speicherkatalysator verbleibt. Seine Speicherfähigkeit für Stickoxide ist also vermindert.

Die verminderte Speicherfähigkeit führt naturgemäß zu verkürzten Speicherphasen. Nach erfolgter Regeneration und Umschaltung in den Magerbetrieb wird der Schwellwert der Stickoxid-Konzentration hinter dem Katalysator für die Einleitung der nächsten Regeneration schneller überschritten als bei einem vollständig regenerierten Speicherkatalysator.

Wird die Abgastemperatur vor Beginn der Regeneration erhöht, um bei der erhöhten Abgastemperatur den Speicherkatalysator möglichst vollständig zu regenerieren, so tritt während der Temperaturerhöhung eine vorzeitige Emission von Stickoxiden auf, die nicht umgesetzt werden können. Außerdem werden während der Speicherphase ungewollte Stickoxidemissionen bei kurzzeitigen Temperaturerhöhungen durch thermische Desorption von Stickoxiden beobachtet. Diese ungewollten Emissionen vermindern den erzielbaren Stickoxidumsatz.

Aufgabe der vorliegenden Erfindung war es daher, ein Verfahren zum Betreiben eines Stickoxid-Speicherkatalysators an einem Dieselmotor anzugeben, mit welchem diese ungewollten Emissionen weitgehend vermindert werden können.

Diese Aufgabe wird durch ein Verfahren gemäß den Ansprüchen gelöst. Bei diesem Verfahren wird der Stickoxid-Speicherkatalysator in der Abgasreinigungsanlage eines Dieselmotors mit abwechselnden Speicher- und Regenerationsphasen betrieben, wobei der Katalysator während des Betriebs des Motors mit einem mageren Luft/KraftstoffGemisch die im Abgas enthaltenen Stickoxide speichert und der Katalysator durch Betreiben des Motors mit einem fetten Luft/Kraftstoff-Gemisch regeneriert wird, wenn die Stickoxidkonzentration hinter dem Katalysator über einen Grenzwert ansteigt. Das Verfahren ist dadurch gekennzeichnet, daß während Betriebsphasen bei Abgastemperaturen zwischen 120 und 250°C der Speicherkatalysator in üblicher Weise periodisch durch Anfetten des Abgases bei gleichbleibender Abgastemperatur regeneriert wird und daß, entweder nach jeder dritten bis zehnten Regeneration oder wenn die Dauer der Speicherphasen einen vorgegebenen Wert unterschreitet, direkt im Anschluß an eine solche Regeneration in einer zweiten Regenerationsstufe zusätzlich die Abgastemperatur zur vollständigen Regeneration des Speicherkatalysators in einen Bereich zwischen 300 und 400 °C angehoben und damit auch die fester gebundenen Nitrate desorbiert und umgesetzt werden.

Erfindungsgemäß wird also das Problem der vollständigen Regeneration eines bei niedrigen Abgastemperaturen betriebenen Speicherkatalysators ohne vorzeitige Emission von Stickoxiden dadurch gelöst, daß von Zeit zu Zeit eine zweistufige Regeneration vorgenommen wird. Die erste Stufe dieser Regeneration entspricht einer üblichen Regeneration, das heißt der Motor wird bei gleichbleibender Abgastemperatur von Magerbetrieb in den Fettbetrieb umgeschaltet. Während dieser Regenerationsstufe werden lose gebundene Stickoxide desorbiert und umgesetzt. Um auch die fester gebundenen Stickoxide umzusetzen, wird im Anschluß an diese konventionelle Regenerationsstufe die Abgastemperatur durch entsprechende motorische Maßnahmen bei gleichbleibend fettem Abgas in den Bereich zwischen 300 und 400°C angehoben. Bei dieser Abgastemperatur werden auch die fester gebundenen Stickoxide desorbiert und am Katalysator umgesetzt. Danach wird der Motor wieder in den Magerbetrieb zurückgeschaltet.

Die zweistufige Regeneration muß nicht bei jedem Regenerationsereignis vorgenommen werden. Es hat sich als ausreichend erwiesen, wenn nur nach jeder 3. bis 10. konventionellen Regeneration eine zweistufige Regeneration vorgenommen wird. Alternativ hierzu kann die Dauer der Magerphasen als Maß für die Abnahme der Speicherkapazität durch unvollständige Regeneration bei niedrigen Abgastemperaturen herangezogen werden. Wie schon oben erläutert, wird der Magermotor bevorzugt vom Magerbetrieb in den Fettbetrieb umgeschaltet, wenn die Stickoxidkonzentration im Abgas hinter dem Speicherkatalysator einen vorgegebenen Grenzwert übersteigt. Dies führt dazu, daß sich die Dauer der Magerphasen mit abnehmender Speicherkapazität verkürzt. Unterschreitet der Wert für die Dauer der Speicherphasen einen vorgegebenen Wert, so wird die zweistufige Regeneration eingeleitet. Bevorzugt beträgt der vorgegebene Wert für die Dauer der Speicherphasen zur Einleitung der zweistufigen Regeneration 40 bis 70 % der Dauer der Speicherphasen für den vollständig regenerierten Speicherkatalysator.

Die gestufte Regeneration gemäß der Erfindung ermöglicht es, den Speicherkatalysator ausgehend von einer langen Phase mit niedriger Abgastemperatur vollständig zu regenerieren ohne plötzliche und starke Desorption der Stickoxide.

Die Erfindung wird nun an Hand der folgenden Untersuchungen näher erläutert. Es zeigen
- **Figur 1:**: Messung der thermischen Desorption von einem Speicherkatalysator, nach-dem er bei verschiedenen Temperaturen mit NO bis zum vollständigen Durchbruch von NO beladen wurde.
- **Figur 2:**: Messung der thermischen Desorption von einem Speicherkatalysator, nach-dem er bei verschiedenen Temperaturen mit NO bis zum 50 % Durchbruch von NO beladen wurde.
- **Figur3:**: Vergleich der thermischen Desorption von einem Speicherkatalysator nach Beladung bei 175 °C bis zum vollständigen, beziehungsweise bis zum 50 % Durchbruch von NO.
- **Figur 4:**: Vergleich der thermischen Desorption von einem Speicherkatalysator nach Beladung bei 200 °C bis zum vollständigen, beziehungsweise bis zum 50 % Durchbruch von NO.

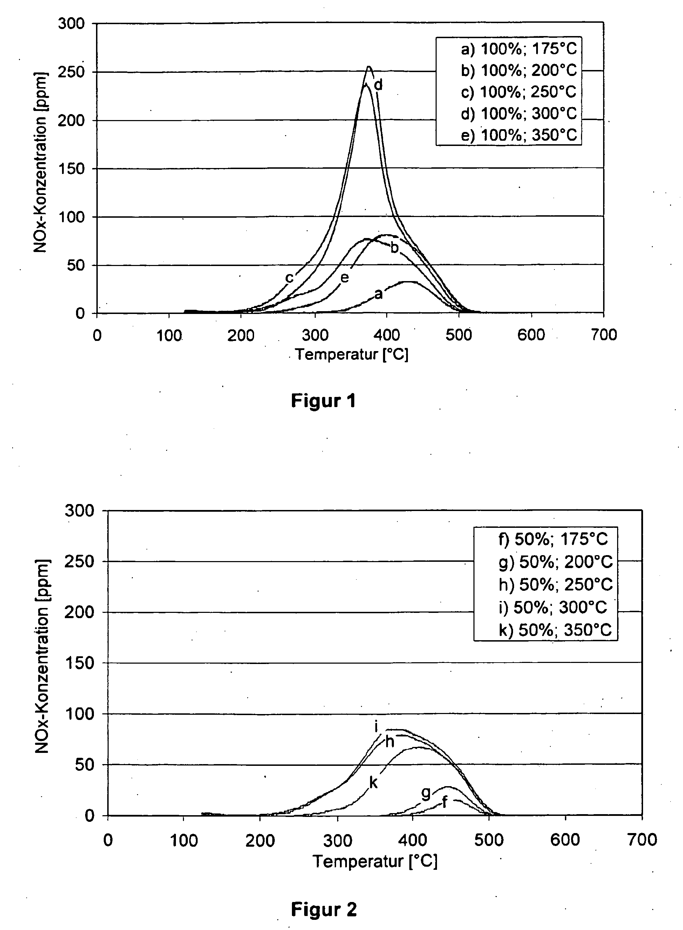

Die Figuren 1 bis 4 zeigen eine Serie von thermischen Desorptionskurven von einem Stickoxid-Speicherkatalysator nach Beladung des Katalysators mit Stickoxiden durch Beaufschlagung mit einem Modellabgas, welches eine Konzentration von 350 ppm Stickstoffmonoxid aufwies. Der Stickoxid-Speicherkatalysator enthielt Bariumoxid für die Speicherung der Stickoxide sowie mit Platin und Rhodium aktiviertes Aluminiumoxid zur Oxidation von Stickstoffmonoxid zu Stickstoffdioxid während der Magerphase (Speicherphase) und zur Reduktion der freigesetzten Stickoxide während der Regenerationsphase.

Die Beladung des Katalysators erfolgte bei verschiedenen Abgastemperaturen (Adsorptionstemperaturen). Als Abgas diente ein Modellgas mit den in der untenstehenden Tabelle aufgeführten Abgasbestandteilen zur Simulation von Mager- und Fettbetrieb eines Motors.

Zunächst wurde der Katalysator im fetten Abgas bei einer Raumgeschwindigkeit (GHSV) von 50.000 h⁻¹ für die Dauer von 30 Minuten bei 550 °C konditioniert. Dann wurde auf mageres Abgas umgeschaltet und der Katalysator abgekühlt. Nach Erreichen der gewünschten Adsorptionstemperatur wurden dem mageren Abgas 350 Vol.-ppm (Volumen-ppm) NO zugeführt. Zu Beginn eines jeden Beladungsvorganges war die hinter dem Katalysator meßbare Konzentration an Stickstoffmonoxid wegen der guten Speicherfähigkeit des Katalysators praktisch Null. Mit zunehmender Beladung stieg die Stickoxid-Konzentration hinter dem Katalysator langsam an. Die Beladung wurde so lange fortgeführt, bis hinter dem Katalysator 50 beziehungsweise 100 % der dem Katalysator zugeführten NO-Konzentration meßbar wurde.

Danach wurde der Katalysator unter mageren Bedingungen jeweils auf eine Starttemperatur für die Desorptionsmessungen von 100 °C abgekühlt. Die Desorption der Stickoxide, das heißt die Stickoxid-Konzentration hinter dem Katalysator, wurde dann unter mageren Bedingungen in Abhängigkeit von der Modellgastemperatur gemessen, die zu diesem Zweck mit einer Rate von 10 °C/min angehoben wurde.

**Tabelle: Modellgaszusammensetzung**

| Modellgaskomponente | | Mageres Abgas λ=1,66 | Fettes Abgas λ = 0,85 |
|---|---|---|---|
| CO | [Vol.-%] | 0,035 | 4,5 |
| H₂ | [Vol.-%] | 0,0116 | 1,5 |
| O₂ | [Vol.-%] | 10 | 0,44 |
| C₃H₈ | [Vppm] | 0 | 0 |
| C₃H₆ | [Vppm] | 150 | 4000 |
| NO-Adsorption | [Vppm] | 350 | 0 |
| CO₂ | [Vol.-%] | 10 | 10 |
| Wasser | [Vol.-%] | 10 | 10 |
| N₂ | | Rest | Rest |
| | | | |
| GHSV | [h⁻¹] | 50.000 | 50.000 |
| T | [°C] | 100 - 600 | 550 |
| Temperaturrampe | [°C/min] | 10 | |

In einer ersten Versuchsserie wurde die Beladung so lange fortgeführt, bis die Konzentration hinter dem Katalysator gleich der Eingangskonzentration (100 %) war. Dieser Zustand entsprach einer vollständigen Beladung des Katalysators bis zur Sättigung mit Stickoxiden.

Die gemessenen Desorptionskurven zeigt Figur 1. Man erkennt an der Höhe der- Desorptionsmaxima, daß die Speicherkapazität mit zunehmender Temperatur ansteigt, etwa bei einer Temperatur von 300 °C ihren Höhepunkt erreicht (Kurve d) und danach infolge thermischer Desorption wieder abnimmt (Kurve e, Abgastemperatur 350 °C).

In einer zweiten Versuchsserie wurde die Beladung nach Erreichen einer Stickoxidkonzentration hinter dem Katalysator von 50 % der Eingangskonzentration beendet. Die zugehörigen Desorptionskurven zeigt Figur 2. Diese Messungen zeigen prinzipiell dieselbe Abhängigkeit der Speicherkapazität von der Temperatur.

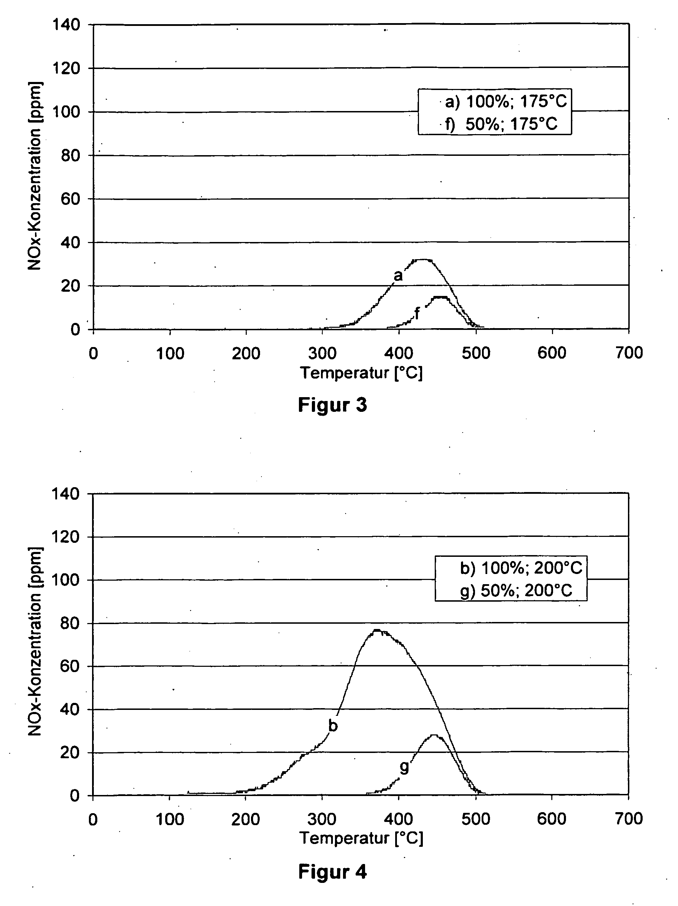

In den Figuren 3 und 4 sind die Kurven aus den Figuren 1 und 2 für eine Beladungstemperatur von 175 (Figur 3, Meßkurven a und f) beziehungsweise 200 °C (Figur 4, Meßkurven b und g) miteinander verglichen.

Die Figuren 3 und 4 zeigen eine interessante Eigenschaft der Desorptionskurven. Während ihre rechte Flanke unabhängig von der Abgastemperatur während der Beladung ist, verschiebt sich der Beginn der Desorption (linke Flanke der Desorptionskurven) bei nur teilweiser Beladung des Katalysators zu höheren Temperaturen.

Man erkennt, daß bei höherer Beladung des Stickoxidspeicherkatalysators ein Großteil der gespeicherten Stickoxide sehr locker gebunden ist und schon bei relative niedrigen Temperaturen zwischen 200 und 300 °C thermisch desorbiert wird. Zur Vermeidung dieser Desorption werden erfindungsgemäß zunächst diese lose gebundenen Anteile ohne Temperaturerhöhung des Abgases durch Umschalten in den Fettbetrieb regeneriert. Erst danach wird die Abgastemperatur erhöht und auch der fester gebundene Anteil der Stickoxide regeneriert.

## Patentansprüche

1. Verfahren zum Betreiben eines Stickoxid-Speicherkatalysators in der Abgasreinigungsanlage eines Dieselmotors mit abwechselnden Speicher- und Regenerationsphasen, wobei der Katalysator während des Betriebs des Motors mit einem mageren Luft/Kraftstoff-Gemisch die im Abgas enthaltenen Stickoxide speichert und der Katalysator durch Betreiben des Motors mit einem fetten Luft/KraftstoffGemisch regeneriert wird, wenn die Stickoxidkonzentration hinter dem Katalysator über einen Grenzwert ansteigt,
**dadurch gekennzeichnet,**
**daß** während Betriebsphasen bei Abgastemperaturen zwischen 120 und 250 °C der Speicherkatalysator in üblicher Weise periodisch durch Anfetten des Abgases bei gleichbleibender Abgastemperatur regeneriert wird und daß, entweder nach jeder dritten bis zehnten Regeneration oder wenn die Dauer der Speicherphasen einen vorgegebenen Wert unterschreitet, direkt im Anschluß an eine solche Regeneration in einer zweiten Regenerationsstufe zusätzlich die Abgastemperatur zur vollständigen Regeneration des Speicherkatalysators in einen Bereich zwischen 300 und 400 °C angehoben wird und damit auch die fester gebundenen Nitrate desorbiert und umgesetzt werden.

2. Verfahren nach Anspruch 1,
**dadurch gekennzeichnet,**
**daß** der vorgegebene Wert für die Dauer der Speicherphasen zur Einleitung der zweiten Regenerationsstufe 40 bis 70 % der Dauer der Speicherphasen für den vollständig regenerierten Speicherkatalysator beträgt.

## Claims

1. Method for operating a nitrogen oxide storage catalytic converter in the exhaust-gas purification system of a diesel engine with alternating storage and regeneration phases, with the catalytic converter storing, during operation of the engine with a lean air/fuel mixture, the nitrogen oxides contained in the exhaust gas, and with the catalytic converter being regenerated, if the nitrogen oxide concentration downstream of the catalytic converter rises above a limit value, by means of operation of the engine with a rich air/fuel mixture,
**characterized**
**in that**, during operating phases at exhaust-gas temperatures of between 120 and 250°C, the storage catalytic converter is regenerated periodically in the conventional manner by means of an enrichment of the exhaust gas at a constant exhaust-gas temperature, and in that, either after every third to tenth regeneration or if the duration of the storage phases falls below a predefined value, the exhaust-gas temperature is additionally raised directly after such a regeneration in a second regeneration step into a range between 300 and 400°C for complete regeneration of the storage catalytic converter, and even the firmly bonded nitrates are thereby desorbed and converted.

2. Method according to Claim 1,
**characterized**
**in that** the predefined value for the duration of the storage phases for the initiation of the second regeneration step is 40 to 70% of the duration of the storage phases for the fully-regenerated storage catalytic converter.

## Revendications

1. Procédé pour faire fonctionner un catalyseur accumulateur d'oxydes d'azote dans l'installation de purification des gaz d'échappement d'un moteur diesel avec des phases alternées d'accumulation et de régénération, le catalyseur stockant les oxydes d'azote contenus dans le gaz d'échappement pendant le fonctionnement du moteur avec un mélange pauvre d'air et de carburant, et le catalyseur étant régénéré en faisant fonctionner le moteur avec un mélange riche d'air et de carburant, quand la concentration en oxydes d'azote derrière le catalyseur augmente au-delà d'une valeur limite,
**caractérisé en ce que**
pendant les phases de fonctionnement à des températures de gaz d'échappement comprises entre 120 et 250°C, le catalyseur accumulateur est régénéré de manière usuelle périodiquement par enrichissement du gaz d'échappement à une température de gaz d'échappement constante, et **en ce que** soit après trois à dix régénérations, soit lorsque la durée des phases d'accumulation est inférieure à une valeur prédéfinie, on augmente en plus la température des gaz d'échappement dans une plage comprise entre 300 et 400 °C directement à la suite d'une telle régénération dans une deuxième étape de régénération pour réaliser la régénération complète du catalyseur accumulateur, et de ce fait les nitrates liés solides sont désorbés et convertis.

2. Procédé selon la revendication 1,
**caractérisé en ce que**
la valeur prédéfinie pour la durée des phases d'accumulation pour l'introduction de la deuxième étape de régénération représente 40 à 70 % de la durée des phases d'accumulation pour le catalyseur accumulateur complètement régénéré.
